# DEMANDE DE BREVET EUROPEEN

(11) **EP 1 985 734 A2**
(43) Date de publication de la demande: **29.10.2008**
(21) Numéro de dépôt: 08305123.5
(22) Date de dépôt: 24.04.2008
(51) Int. Cl.: D04G 1/00, B65H 57/00, A01K 75/00

(54) **Dispostif pour le montage d'une corde support sur nappe(s) de filet, en particulier du type filet de pêche**

(30) Priorité: 24.04.2007 FR 0702970
(71) Demandeur: Cooperative Maritime de Noirmoutier, 85330 Noirmoutier en l'Ile (FR)
(72) Inventeur: Frioux, Rémi, 85330 Noirmoutier en l'Ile (FR); Michaud, Yannick, 85330 Noirmoutier en l'Ile (FR)
(74) Mandataire: Michelet, Alain

(57) **Abrégé**

La présente invention concerne un dispositif pour le montage et la fixation d'une corde support (2) sur une nappe de filet ou un pré-assemblage de nappes de filet (5), en particulier de filet de pêche, équipé d'au moins un fil de montage (6) muni sur sa longueur d'une pluralité de boucles (7) au travers desquelles ladite corde support (2) est enfilée, certaines au moins desdites boucles (7b) se présentant avantageusement sous forme de noeuds du type « autoserrants » destinés à être serrés sur ladite corde (2).
Conformément à l'invention, ce dispositif comportant un châssis (10) équipé :
- de moyens (11) pour guider ladite corde support (2) enfilée sur les boucles de nappe(s) (7), cela lors d'une traction exercée sur l'ensemble corde support (2)/fil de montage (6), et
- de moyens structurels (12), du type corps rotatif (13) muni d'organes de retenue rayonnés (14), adaptés pour retenir temporairement et successivement chacune desdites boucles (7) au cours de ladite traction exercée sur ledit ensemble corde support (2)/fil de montage (6), le cas échéant de manière à assurer le serrage successif desdits noeuds « autoserrants » (7b) sur ladite corde support (2) associée et ainsi à assurer la fixation de ladite nappe ou dudit pré-assemblage de nappes (5) sur ladite corde support (2).

## Description

La présente invention concerne le domaine du montage et de la fixation de cordes supports, en particulier constitutives d'une ligne de flottaison et/ou de lest pour filet de pêche, sur une nappe ou un pré-assemblage de nappes de filet qui est équipé(e) d'une pluralité de boucles au travers desquelles ladite corde support est enfilée. La présente invention porte en particulier sur un dispositif pour la mise en oeuvre de cette opération de montage et de fixation.

Les filets de pêche se composent généralement d'une nappe de filet ou d'un pré-assemblage de plusieurs nappes de filet superposées, dont les bordures longitudinales inférieure et supérieure reçoivent chacune un fil de montage fixé sur une corde support, formant respectivement ligne de lest et ligne de flottaison (connue encore sous l'appellation de « ralingue »).
On note que les filets constitués de plusieurs nappes sont communément appelés filets « tramails ».

De manière traditionnelle, le fil de montage est piqué à intervalles réguliers sur la corde support au moyen d'une machine à coudre « marinisée » ; un nombre prédéterminé et constant de mailles est prévu entre deux points de piquage.
Ce type de fixation par piquage permet un maintien optimal de la ou des nappes de filets sur la longueur des deux cordes supports. Cependant, cette opération de piquage est relativement longue, coûteuse et fastidieuse pour les opérateurs. De plus, ce piquage a tendance à dégrader les cordes supports, ce qui limite leurs possibilités de réutilisation ; d'autre part, lorsqu'on souhaite remplacer les nappes de filet dégradées, la coupe ou le démontage des points de piquage (ou « déralinguage ») est relativement difficile à réaliser, ce qui rend cette opération également complexe et fastidieuse.

Pour remédier à ces inconvénients, on connaît maintenant, comme décrit dans les documents FR-2 886 102 ou FR-2 890 531, des nappes de filet ou des pré-assemblages de nappes, dont les fils de montage sont munis sur leur longueur d'une pluralité de boucles « simples » au travers desquelles la corde support est destinée à être enfilée. Chacune de ces boucles passe avantageusement au travers d'un fil, dit « fil de répartition », qui permet de déterminer la distance ou « cote » entre les boucles, et qui assure une répartition des mailles sur toute la longueur des cordes supports associées.

En pratique, avant montage, ce filet se présente sous la forme d'un ensemble prêt à monter, les boucles de chacun des deux fils de montage étant enfilées sur un tube support.
Ensuite sur le site d'assemblage, une corde support est introduite au travers de chacun des tubes ; le fil de montage (et éventuellement le fil de répartition) est relié avec la corde support associée, puis il suffit de tirer sur l'ensemble fil de montage/corde support afin de transférer les boucles du fil de montage sur la longueur de la corde support associée.

Cette liaison par boucles a l'intérêt majeur de permettre un montage simple et rapide des cordes supports sur la ou les nappes de filet, cela par simple traction sur l'ensemble corde support/fil de montage.
Cependant, une fois l'assemblage réalisé, en l'absence de points de liaison intermédiaires entre le fil de montage et la corde support associée, les boucles ne restent pas réparties de manière homogène sur toute la longueur de la corde associée. Ainsi, en pratique, il est fréquent d'observer des phénomènes de repliements locaux de la ou des nappes de filet et/ou de la corde support, avec les problèmes de mélange et de dégradation du filet qui en découlent.

Par ailleurs, comme présenté dans les deux documents précités FR-2 886 102 et FR-2 890 531, il existe aussi des nappes de filet équipées d'une succession de boucles se présentent sous la forme de noeuds de fixation « autoserrants » (deux demi-clés inversées), destinés à être serrés sur la corde support associée.

Dans certaines autres réalisations actuelles, les nappes de filet comportent une combinaison de boucles simples et de boucles en forme de noeuds « autoserrants ».
Dans ce cas et comme décrit par exemple dans le document WO-2006/125929, le noeud autoserrant est constitué avantageusement par un fil rapporté qui est fixé sur le fil de répartition, au travers duquel passent les boucles simples et lesdites boucles autoserrantes.
Ce fil rapporté se compose d'une portion centrale formant le noeud proprement dit, juxtaposée à l'une des boucles simples du fil de montage ; cette portion centrale est prolongée par deux brins latéraux dont les extrémités libres sont solidarisées chacune avec le fil de répartition, juste devant la boucle simple juxtaposée. La longueur entre les deux extrémités de ce fil rapporté est avantageusement inférieure à la longueur du fil de montage s'étendant entre les deux boucles simples juxtaposées précitées, pour assurer un phénomène de serrage optimal du noeud lors du montage et des utilisations ultérieures du filet.
Pour être complet, le noeud de ce fil rapporté est avantageusement du genre en tête d'alouette ou de type à deux demi-clés inversées ; un nombre prédéterminé de boucles simples est isolé entre deux noeuds autoserrants.

Cette liaison particulière entre le fil de montage et la corde support permet d'allier son montage aisé, tout en permettant le maintien d'une répartition homogène de la ou des nappes sur la longueur des cordes supports associées.
Malgré le réel intérêt de ce dernier type de filet, il s'avère difficile d'obtenir un serrage simple, rapide et efficace des noeuds sur la corde support associée, et cela en respectant la distance optimale séparant deux boucles juxtaposées.

Ainsi, la demanderesse a développé un dispositif original pour le montage d'une corde support sur une nappe de filet ou un pré-assemblage de nappes de filet équipées d'un fil de montage muni sur sa longueur d'une pluralité de boucles, soit « simples », soit en forme de noeuds autoserrants (par exemple de type « noeuds coulants »), soit une alternance de ces deux types de boucles.

Le dispositif en question a l'intérêt de permettre un montage simple, efficace, rapide et régulier des cordes supports sur ce type de nappe(s) munie(s) de boucles.
Conformément à l'invention, le dispositif de montage comporte un châssis équipé :
- de moyens pour guider la corde support enfilée sur les boucles de nappe(s), cela lors d'une traction exercée sur l'ensemble corde support/fil de montage, et
- de moyens structurels adaptés pour retenir temporairement et successivement chacune desdites boucles au cours de ladite traction exercée sur ledit ensemble corde support/fil de montage.
   Les moyens structurels de ce dispositif, et principalement ses moyens de retenue, interviennent en particulier pour obtenir un espacement homogène et régulier entre les boucles successives, permettant une répartition optimale de la ou des nappes de filet sur la longueur de la ou des cordes supports associées ; le cas échéant, ils ont également comme fonction d'assurer le serrage successif des noeuds autoserrants sur la corde support associée et ainsi d'assurer la fixation de la nappe ou du pré-assemblage de nappes sur ladite corde support.
   Les moyens de retenue correspondants comprennent pour cela un corps équipé de n organe(s) de retenue, chacun formé d'une tige allongée et rayonnée ; ce corps est associé au châssis par des moyens autorisant sa mise en rotation autour d'un axe perpendiculaire à celui de la corde support circulant au sein des moyens de guidage ; des moyens d'indexation assurent le blocage de la rotation dudit corps support, avec une force de blocage définie, selon des positions situées à un pas régulier de 1/n tour, cela de sorte que chaque position bloquée dudit corps corresponde à la configuration active de l'un desdits organes de retenue dans laquelle il vient se placer entre la corde et le fil de montage sur le trajet des boucles, pour constituer une butée aval apte à s'opposer à l'avancement d'une boucle lors de la traction sur l'ensemble fil de montage/corde support, le ou les autres organes de retenue étant en configuration inactive dans laquelle ils sont écartés du trajet desdites boucles, et de sorte que la rotation dudit corps support soit mise en oeuvre par l'action des boucles provenant de la traction sur l'ensemble corde support/fil de montage ; la force de blocage est avantageusement configurée de manière à assurer un compromis entre la retenue des boucles et la force de traction à appliquer sur l'ensemble corde support/fil de montage.

Selon une réalisation préférée, les moyens d'indexation comportent avantageusement des moyens permettant le réglage de la force de blocage. De tels moyens sont intéressants pour permettre un réglage de la force de traction à exercer sur l'ensemble corde support/fil de montage, notamment en fonction des moyens de traction mis en oeuvre (motorisés ou manuels).

Selon une autre caractéristique, les moyens de guidage de la corde support consistent avantageusement en un conduit comportant un orifice d'entrée et un orifice de sortie, et dont la surface est munie d'une ouverture longitudinale au travers de laquelle sont aptes à cheminer les boucles du fil de montage enfilées sur la corde support. Cette structure permet en particulier un guidage optimal de l'ensemble corde support/fil de montage, mais assure également une action efficace des moyens de retenue sur les boucles de nappe(s).
Dans ce cas, le conduit de guidage de la corde support se compose avantageusement de deux parties en regard, chacune en forme de demi-conduit, mobiles en écartement l'une par rapport à l'autre ; le conduit de guidage est encore associé à des moyens structurels permettant l'écartement par l'opérateur des deux demi-conduits. Un tel conduit de guidage a l'intérêt de pouvoir s'adapter à des diamètres différents de cordes supports, mais aussi d'absorber les éventuelles déformations locales de ces cordes supports ; de même, les moyens d'écartement simplifient le positionnement et l'enlèvement de la corde support par rapport au conduit de guidage.
Toujours dans ce cadre, l'orifice d'entrée du conduit de guidage est avantageusement en forme générale d'entonnoir, dont l'axe s'étend horizontalement. Cette forme particulière permet, d'une part, un guidage d'entrée optimal de la corde support et des boucles associées au sein du conduit, et d'autre part, un positionnement optimal du tube support.

Selon une autre particularité, le dispositif comporte encore un organe tranchant coopérant avec le châssis par le biais de moyens permettant sa manoeuvre entre :
- une configuration active de « tranchage », dans laquelle il vient se placer entre la corde et le fil de montage, sur le trajet des boucles, cela pour assurer la coupe de ces dernières (en particulier pour le « déralinguage »), et
- une configuration inactive rétractée, dans laquelle il est écarté du trajet desdites boucles, de manière à autoriser le cheminement desdites boucles associées à la corde support.
   Un tel dispositif, outre le montage des filets, permet ainsi de réaliser le démontage de la corde support (par activation des moyens de tranchage) en particulier lors de la dégradation des nappes associées, en vue de sa réutilisation.

D'autre part, l'invention porte sur une installation pour le montage d'une corde support sur une nappe de filet ou un pré-assemblage de nappes de filet équipé(e) sur sa longueur d'une pluralité de boucles destinées à venir s'enfiler sur ladite corde support.
A cet effet, cette installation comprend au moins un dispositif de montage tel que décrit ci-dessus, et un élément porteur de tube support pour le transport du filet sous forme repliée, sur lequel sont enfilées les boucles et au travers duquel chemine la corde support, l'extrémité de sortie dudit tube support étant destinée à venir se placer dans le prolongement des moyens de guidage dudit dispositif de montage.

De préférence, cette installation comporte avantageusement encore l'un au moins des éléments structurels suivants :
- un dispositif pour la traction motorisée de l'ensemble corde support/fil de montage, et
- un organe de freinage de l'avancement des boucles sur le tube support.

Dans le cas d'une nappe de filet ou d'un pré-assemblage de nappes de filet muni(e) au niveau de deux de ses bordures d'un fil de montage équipé de boucles, l'installation décrite ci-dessus comporte avantageusement deux ensembles dispositif de montage/élément porteur de tube support, chacun éventuellement associé à un dispositif de traction et/ou organe de freinage, lesdits ensembles étant agencés en regard l'un de l'autre de manière à permettre un montage simultané de deux cordes supports sur la ou les nappes.

L'invention sera encore illustrée, sans être aucunement limitée, par la description suivante de certains modes de réalisation, donnés uniquement à titre d'exemples, et représentés sur les dessins annexés dans lesquels :
- la figure 1 représente, de manière schématique, les principales étapes de la cinématique mise en oeuvre par un dispositif de montage conforme à l'invention, cela au cours du montage d'une corde support sur nappe(s) de filet ;
- la figure 2 est une vue générale et en perspective d'une installation pour le montage simultané de deux cordes supports sur chacun des deux fils de montage équipant les bordures longitudinales d'une nappe de filet ou d'un pré-assemblage de nappes de filet ;
- la figure 3 est une vue en perspective, par devant, d'un dispositif de montage conforme à l'invention équipant l'installation de la figure 2 ;
- la figure 4 montre le dispositif de montage de la figure 3, selon une représentation éclatée ;
- la figure 5 est une vue de face du dispositif de montage de la figure 3 ;
- la figure 6 est une vue latérale du dispositif de montage de la figure 3, orientée du côté de l'orifice d'entrée de son conduit de guidage ;
- la figure 7 est une vue en perspective du dispositif de montage de la figure 3, ici orientée du côté de sa face arrière ;
- la figure 8 est une vue de détail et schématique, selon un plan de coupe transversal, des moyens d'indexation équipant le dispositif de montage ;
- la figure 9 est une vue de détail et schématique montrant le cheminant des boucles au sein du dispositif de montage ;
- la figure 10 est une vue agrandie et détaillée d'une configuration possible des boucles équipant la nappe ou le pré-assemblage de nappes de filet, enfilées sur une corde support, cette configuration de boucles étant particulièrement adaptée à la mise en oeuvre du dispositif de montage conforme à l'invention.

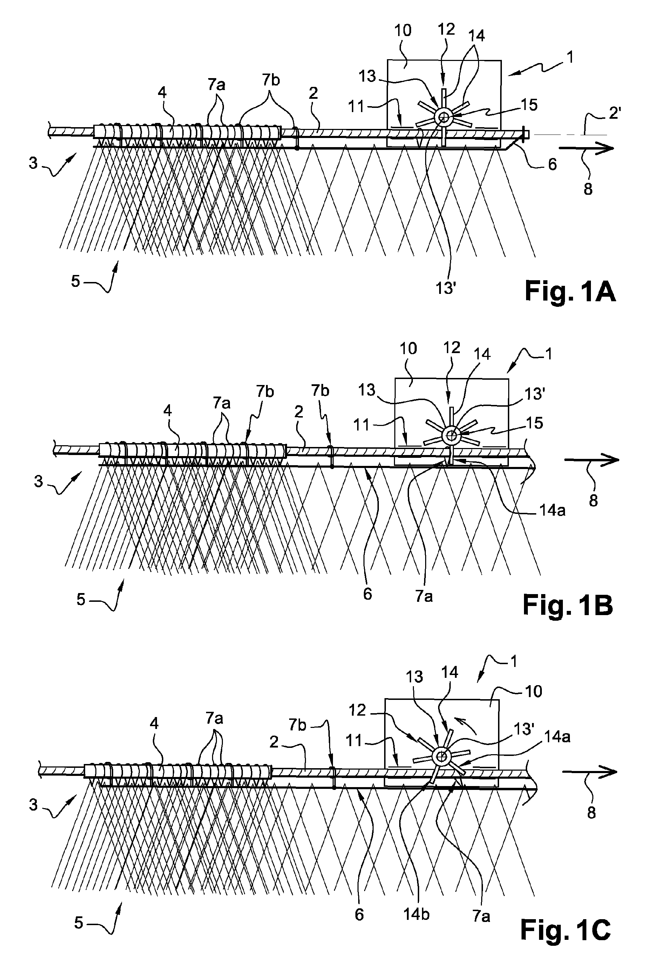

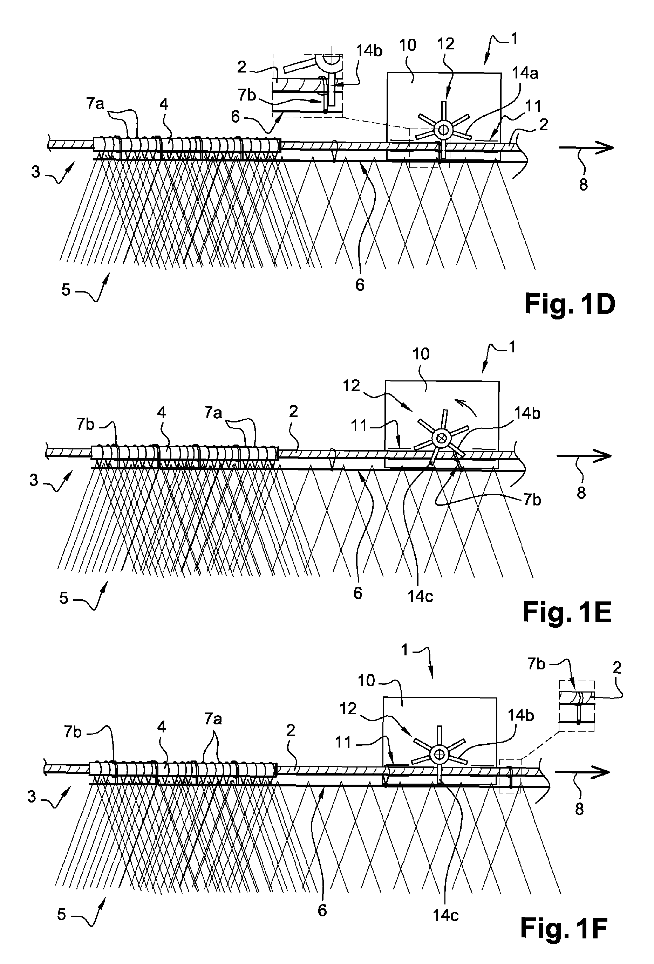

Comme détaillé en relation avec les différentes figures schématiques composant la figure 1 (c'est-à-dire les figures 1A à 1F), le dispositif 1 conforme à l'invention intervient dans le montage et la fixation, sur une corde support 2, d'une structure de type « filet prêt à monter » 3 (pouvant encore être dénommée « filet », « nappe », « pré-assemblage de nappes » ou « kit ») repliée sur un tube de montage 4.

Des exemples de « filets prêts à monter » 3 sont décrits dans les documents FR-2 886 102, FR-2 890 531 ou WO-2006/125929.

En l'occurrence, sur la figure 1, ce filet « prêt à monter » 3 comprend au moins une nappe de filet 5, mais il peut de manière alternative comporter une superposition de nappes dont les mailles ont des calibres différents ; ce dernier type de filet à nappes superposées se rencontre en particulier dans le domaine de la pêche, sous l'appellation de « filets tramails ».
La structure et la configuration de la ou des nappes de filet 5 sont connues de l'homme du métier.
Pour simplifier la suite de la description, on utilisera le terme « nappe » pour designer aussi bien une nappe unique qu'un pré-assemblage de nappes (dénommé encore « kit »).

Les mailles formant la bordure longitudinale de la nappe 5 sont enfilées sur un fil appelé communément « fil de montage » 6. L'autre bordure longitudinale de la nappe 5 (non représentée) peut être également équipée d'un tel fil de montage.
Le fil de montage 6 est muni sur sa longueur d'une pluralité de boucles 7, au travers de chacune desquelles la corde support 2 est enfilée. Ces boucles 7 passent éventuellement au travers d'un fil de répartition (non représenté), s'étendant entre le fil de montage 6 et la corde support 2. De manière générale, un nombre constant de mailles de la bordure de nappe 5 est disposé entre deux boucles 7 successives.

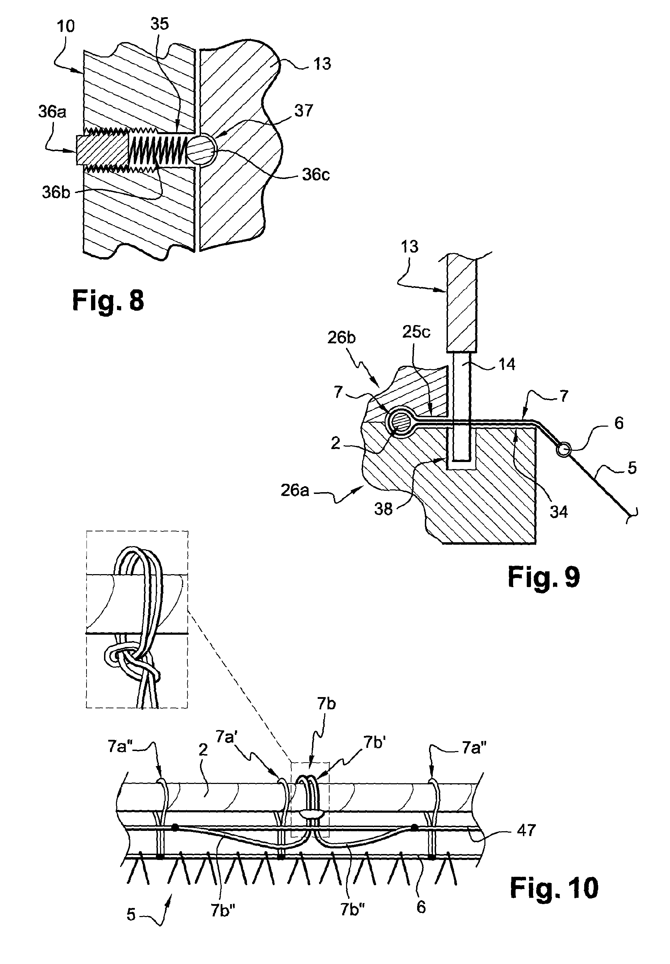

Les boucles 7 en question sont en l'occurrence de deux types, à savoir certaines 7a en forme de boucle « simple », destinées uniquement à ceinturer la corde support 2 avec une certaine possibilité de jeu et de glissement sur la longueur de la corde support associée, et d'autres 7b en forme de noeuds de fixation dits « autoserrants » (par exemple noeuds « coulants », du genre noeuds en tête d'alouette, en deux demi-clés inversées, en tour mort et demi-clés à capeler, ou en chaise double comme présenté à titre d'exemple en relation avec la figure 10).

De manière générale, ces noeuds autoserrants 7b sont régulièrement répartis sur la longueur du fil de montage 6 (par exemple tous les 1, 1,5 ou 2 mètres), un nombre constant de boucles simples 7a étant isolé entre deux noeuds autoserrants 7b successifs ; de manière alternative, la distance et le nombre de boucles simples entre deux noeuds autoserrants peuvent également varier sur la longueur du fil de montage. Ces noeuds 7b sont destinés à assurer la fixation de la nappe 5 sur la corde support 2, et à assurer le maintien d'une répartition homogène ou au moins sensiblement homogène de cette nappe 5 sur la longueur de la corde support 2, après son montage.

Encore de manière classique, la corde support 2 consiste par exemple en une ligne de flottaison, encore appelée « ralingue », ou une ligne de lest.

Le dispositif de montage 1, représenté schématiquement sur la présente figure 1, a notamment pour fonction de provoquer le serrage, ou au moins d'amorcer le serrage, des noeuds autoserrants 7b sur la longueur de la corde support 2 lors de l'opération de montage ; il sert également à obtenir une distance optimale entre deux boucles 7 successives (correspondant à la longueur du fil de montage 6 et/ou du fil de répartition s'étendant entre ces deux boucles), en particulier de sorte à obtenir un serrage à distance constante entre deux noeuds autoserrants 7b et de sorte à répartir efficacement la nappe 5 sur la longueur de la corde support 2 associée.

A cet effet, comme on peut le voir sur la figure 1, le dispositif de montage 1 comporte principalement un châssis 10 équipé :
- de moyens 11 pour guider la corde support 2 enfilée sur les boucles 7 du filet prêt à monter 3, et
- de moyens structurels 12 adaptés pour retenir temporairement et successivement chacune des boucles 7 au cours d'une traction (selon la flèche repérée 8 sur la figure 1) exercée simultanément sur la corde support 2 et le fil de montage 6 (éventuellement aussi sur le fil de répartition).

Les moyens de retenue 12 en question se composent, en l'occurrence, d'un corps rotatif 13 équipé de n organes de retenue 14 (ici au nombre de 6), chacun formé d'une tige allongée et rayonnée, qui sont régulièrement répartis et séparés deux à deux selon un secteur angulaire constant.
Cette configuration particulière des moyens de retenue 12, et en particulier des organes de retenue rayonnés 14, vise en particulier à permettre une action efficace sur chaque boucle 7 cheminant au sein du dispositif de montage 1.

A cet effet, le corps 13 est associé au châssis 10 par des moyens 15 autorisant sa mise en rotation autour d'un axe 13' perpendiculaire à l'axe 2' selon lequel est destinée à cheminer la corde support 2 tractée au sein des moyens de guidage 11.

Des moyens d'indexation (non visibles sur la figure 1) confèrent une rotation « discontinue » au corps 13, cela pour lui appliquer un pas régulier de rotation selon un secteur angulaire constant de 1/n tour (en l'occurrence de 1/6 de tour).

Ainsi, le corps 13 est apte à prendre ici six positions « bloquées » différentes, correspondant chacune à un pas de rotation. Ces positions bloquées correspondent chacune au positionnement de l'un des organes de retenue 14 entre la corde support 2 et le fil de montage 6 (et le cas échéant, avantageusement, entre la corde support 2 et l'ensemble fil de montage 6/fil de répartition), cela sur le trajet des boucles 7, formant la « configuration active » dudit organe 14 ; les autres organes de retenue 14 sont alors positionnés hors du trajet des boucles 7, c'est-à-dire en « configuration inactive ».

Les moyens d'indexation maintiennent le corps 13 dans chaque position bloquée avec une force de blocage définie. Une traction suffisante sur l'un au moins des organes de retenue 14, supérieure à la force de blocage précité, permet un déblocage du corps 13, qui est alors apte à pivoter d'une position bloquée à la position bloquée suivante de manière libre ou sensiblement libre.
Comme expliqué par la suite, cette force de blocage doit assurer un compromis efficace entre la retenue des boucles 7 et la force de traction à appliquer sur l'ensemble corde support 2/fil de montage 6.

En pratique, selon la figure 1A, l'opérateur positionne le tube de montage 4, associé à son filet prêt à monter 3, en regard des moyens de guidage 11 du dispositif de montage 1, puis il introduit la corde support 2 au travers du tube de montage 4 et au sein des moyens de guidage 11.
Ensuite, l'opérateur relie l'extrémité libre de la corde support 2 avec l'extrémité correspondante du fil de montage 6 (et éventuellement du fil de répartition), cela par exemple par le biais d'un simple noeud ou d'un point de piquage (toujours figure 1 A).

Il suffit alors d'exercer une traction sur l'ensemble corde support 2/ligne de montage 6, cela de manière à déployer progressivement le filet « prêt à monter » 3 et assurer l'opération de montage.
Cette force de traction peut être mise en oeuvre par un opérateur ou par le biais d'un moyen de traction motorisé par exemple de type tambour(s) motorisé(s).

Ainsi, en fonctionnement, la traction sur l'ensemble corde support 2/fil de montage 6 provoque le transfert successif des boucles 7 depuis le tube support 4 vers la corde support 2, puis leur cheminement associé avec cette dernière.

Lorsqu'une boucle simple 7a arrive au contact amont d'un organe de retenue 14a en position active et que le corps 13 est en position bloquée (figure 1B), ledit organe de retenue 14a forme une butée aval et exerce une résistance à l'avancement de cette boucle 7a, assurant un allongement optimal du fil de montage 6 (et le cas échéant, du fil de répartition), en aval dudit organe 14a.
La poursuite de la traction sur l'ensemble corde support 2/fil de montage 6 provoque alors une poussée sur l'organe de retenue actif 14a jusqu'à générer le déblocage du corps 13 et aboutir à sa mise en rotation (ici en sens inverse des aiguilles d'une montre, figure 1C).
Le corps 13 pivote jusqu'à sa position bloquée suivante sous l'action de la traction exercée par la boucle 7a (figure 1 D). L'organe de retenue actif 14a se déplace vers une configuration inactive (en dehors du trajet de la boucle 7a), libérant la boucle « tractrice » 7a ; l'organe de retenue suivant 14b, dans le sens inverse des aiguilles d'une montre sur la figure 1, vient simultanément prendre place en configuration active, cela en amont de la boucle 7a libérée et en aval de la boucle 7 suivante.

Dans ce cas, lors de la traction sur l'ensemble corde support 2/fil de montage 6, ce dernier est maintenu tendu ou au moins relativement tendu, ce qui permet de maintenir une distance constante entre les boucles simples 7a venant successivement en appui sur les organes de retenue 14. Cette mise en tension s'applique également, avantageusement, au fil de répartition lorsqu'il est présent.

Lorsqu'une boucle de type noeud autoserrant 7b vient en contact avec un organe de retenue actif 14 du corps 13 en position bloquée (organe 14b sur figure 1 D), cet organe de retenue 14b va, là encore, assurer une mise en tension aval du fil de montage 6 (et du fil de répartition éventuellement associé) ; dans le même temps, du fait de la traction sur le fil de montage 6 (et/ou de la traction sur le fil de répartition éventuellement associé), le noeud autoserrant 7b se serre (ou au moins amorce un serrage) sur la corde support 2 associée.
Là encore, la poursuite de la traction sur l'ensemble corde support 2/fil de montage 6 aboutit au déblocage du corps 13 et à sa mise en rotation vers la position bloquée suivante (dans le sens inverse des aiguilles d'une montre), provoquant le passage de l'organe de retenue 14b en question d'une configuration active vers une configuration inactive et libérant le noeud autoserrant « tracteur » 7b.

Les moyens de retenue 12 vont ainsi retenir temporairement et successivement chacune des boucles 7, simple ou en forme de noeud, tout au long de la traction exercée sur l'ensemble corde support 2/fil de montage 6 (et éventuellement fil de répartition), cela jusqu'à ce que la totalité de la corde support 2 ait été associée au filet « prêt à monter » 3 ou lorsque ce filet « prêt à monter » 3 est entièrement déployé sur la corde support 2.
Cette opération de montage, grâce au dispositif, est rapide, simple et efficace. On obtient en plus un travail de qualité, avec une répartition optimale des boucles sur la longueur de la corde support associée.

De manière générale, selon d'autres formes de réalisation non représentées, les moyens de retenue peuvent également comporter un organe de retenue unique, en forme de tige par exemple, manoeuvrable en translation ou en pivotement entre les positions active et inactive.
Cette manoeuvre peut être provoquée par l'avancement des boucles comme détaillé ci-dessus (avec des moyens de rappel élastique en position active, convenablement calibrés pour la fonction recherchée de retenue) ou par le biais d'un système motorisé piloté par des moyens de contrôle adaptés.

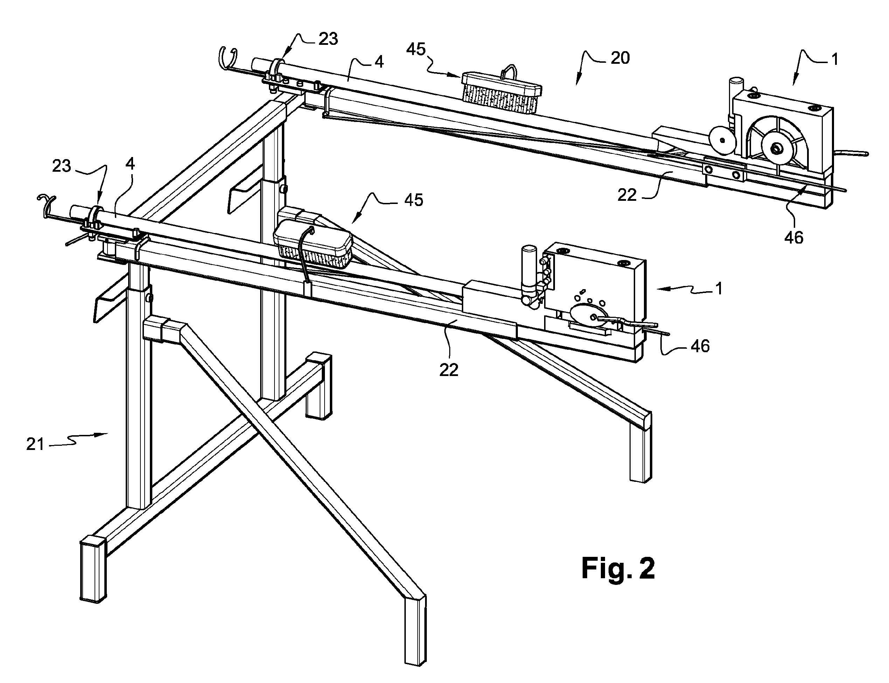

La figure 2 représente une installation 20 adaptée en particulier pour le montage d'un filet prêt à monter muni au niveau de chacune de ses deux bordures longitudinales d'un fil de montage équipé de boucles, dont certaines au moins se présentent sous la forme de noeuds de type autoserrants.

Cette installation 20 se compose en l'occurrence d'un piètement métallique 21, réalisé par un assemblage mécano-soudé de profilés métalliques, portant deux longerons télescopiques horizontaux 22, parallèles et à distance l'un de l'autre. Ces longerons 22 sont équipés chacun, d'une part, d'un dispositif de montage 1 du type de celui décrit ci-dessus en relation avec la figure 1, et d'autre part, de moyens 23 pour le support d'un tube de montage 4 (en l'occurrence de type collier de serrage).
L'aspect télescopique des longerons 22 permet un réglage de la position du dispositif de montage 1 en fonction de la longueur du tube 4 associé.

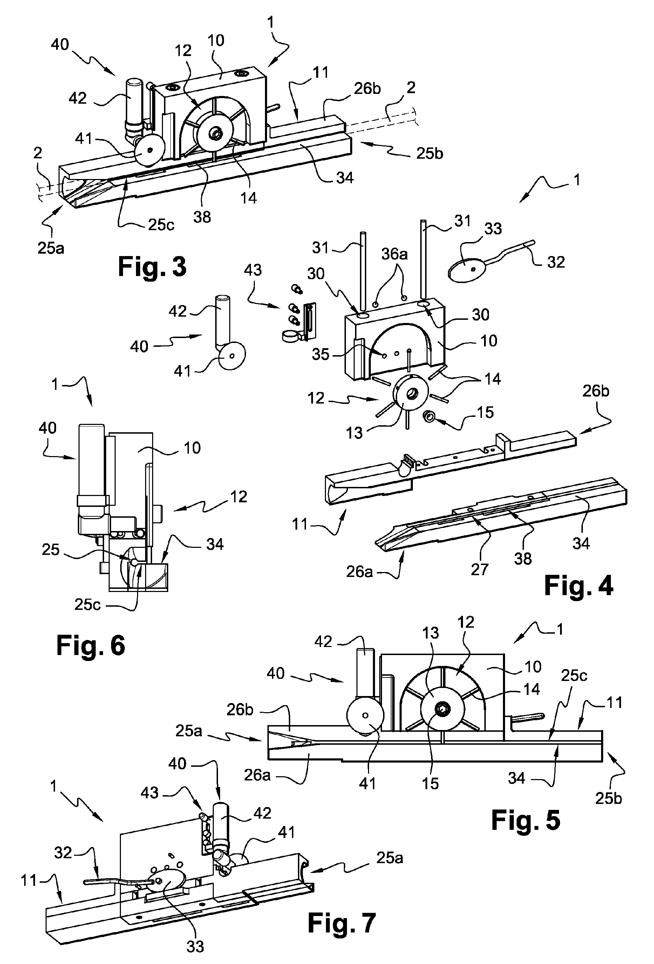

L'un des dispositifs de montage équipant l'installation de la figure 2 est décrit plus en détails ci-dessous en relation avec les figures 3 à 7 ; les éléments structurels communs avec la description de la figure 1 ont les mêmes repères numériques, de manière à simplifier la compréhension.

Sur ces figures 3 à 7, on retrouve un châssis 10 équipé, d'une part, de moyens 11 pour le guidage de la corde support et, d'autre part, de moyens 12 pour la retenue temporaire et successive des boucles de nappe.

Les moyens de guidage 11 en question consistent ici en un conduit 25 comportant un orifice d'entrée 25a et un orifice de sortie 25b, et dont la surface avant est munie d'une ouverture longitudinale 25c.
Le conduit de guidage 25 sert au cheminement de la corde support et des boucles de nappe associées. L'ouverture longitudinale 25c a une hauteur inférieure au diamètre de la corde support, de sorte à permettre uniquement le passage et le cheminement des boucles associées.
On note que l'orifice d'entrée 25a présente une conformation en Vé ou en entonnoir, d'axe central coaxial à celui du conduit de guidage 25. Cette forme particulière en Vé permet en particulier le positionnement d'une extrémité de tube de montage 4 en regard du conduit 25 (figure 2) ; elle optimise également l'entrée de la corde et des boucles associées au sein de ce conduit.

Comme on peut le voir en particulier sur la figure 4, le conduit de guidage 25 est formé par les deux faces en regard, convenablement conformées, de deux pièces longitudinales, l'une inférieure 26a et l'autre supérieure 26b.
Plus précisément, les faces en regard de ces deux pièces 26 sont chacune munies d'une rainure longitudinale 27 à section en demi-cercle, formant chacune un demi-conduit.

Le châssis 10 est solidarisé avec la pièce supérieure 26b des moyens de guidage 11 par des moyens de liaison mécaniques de type boulonnage ; en outre, ce châssis 10 comporte deux logements verticaux débouchants 30 dans lesquels viennent se loger des colonnes de guidage verticales 31 s'étendant à partir de la pièce inférieure 26a associée.
Cette liaison particulière offre une possibilité d'écartement entre les deux parties 26a et 26b constitutives des moyens de guidage 11, cela en particulier de sorte à absorber les éventuelles déformations locales et les diamètres différents de la corde support, mais aussi pour faciliter la mise en place et le retrait de cette corde support au sein du conduit de guidage 25 au travers de l'ouverture longitudinale 25c écartée ; pour mettre en oeuvre cette dernière possibilité, on peut voir sur la figure 7 que l'arrière du dispositif 1 est équipée d'un levier 32 pour la manoeuvre en pivotement d'une came 33 assurant le déplacement relatif des parties 26a et 26b des moyens de guidage 11.

On note encore que la pièce inférieure 26a des moyens de guidage 11 comporte un prolongement frontal 34, s'étendant au niveau de la bordure longitudinale inférieure de l'ouverture longitudinale 25c; ce prolongement 34 a en particulier pour fonction d'assurer une mise en tension efficace des boucles du filet « prêt à monter » lors de leur cheminement au sein du conduit 25.

Par ailleurs, les moyens de retenue 12 se composent d'un corps cylindrique 13 muni sur sa périphérie de six organes de retenue 14, en forme de tiges longitudinales rectilignes rayonnées.
Ce corps 13 est associé au châssis 10 par le biais d'un axe de rotation 15 permettant son pivotement autour d'un axe 13' perpendiculaire à l'axe 2' du conduit de guidage 25.

La rotation pas à pas des moyens de retenue 12 est obtenue par des moyens d'indexation représentés sur la figure 8.
En l'occurrence, le châssis 10 est équipé, au sein de deux orifices traversants filetés 35, de deux ensembles vis 36a/ressort 36b/bille 36c, cette dernière venant se loger de manière élastique au sein de logements complémentaires 37 ménagés au niveau de la face intérieure du corps 13. Les deux ensembles d'indexation 36 sont disposés diamétralement opposés par rapport à l'axe 13' de manière à équilibrer les efforts.

Le nombre de logements 37 du corps 13 correspond au nombre des organes de retenue 14 et leur positionnement est adapté de sorte à obtenir un blocage du corps 13 à chaque fois que l'un desdits organes de retenue 14 se trouve en position active correcte.
Le réglage de la force de blocage par les moyens d'indexation 36, 37 s'effectue par un ajustement du vissage de la vis 36a, de manière à régler le niveau de compression du ressort 36b associé et par conséquent la force d'enfoncement appliquée à la bille 36c dans les logements 37 du corps 13.

Pour être complet, l'organe de retenue 14 en position active vient en regard de l'ouverture longitudinale 25c du conduit de guidage 25, perpendiculairement à cette dernière, de sorte à s'étendre sur le trajet des boucles entrainées par la traction sur l'ensemble corde support/fil de montage. Les autres organes de retenue 14, en configuration inactive, s'étendent hors de l'encombrement de cette ouverture longitudinale 25c.

Sur les figures 3 et 4, on remarque qu'en position active, l'extrémité libre des organes de retenue 14, pénètre au sein d'un logement 38 ménagé dans le prolongement 34 de la pièce 26a ; ce logement 38 est prévu pour ne pas gêner la rotation des organes de retenue 14 autour de leur axe 13'.

Sur les figures 3 à 7, on remarque encore que le châssis 10 est équipé de moyens supplémentaires de tranchage 40, aptes à être mis en oeuvre indépendamment des opérations de montage de filet, pour trancher les boucles 7 montées sur une corde support 2 (opération dite de « déralinguage »).
Les moyens 40 correspondants se composent d'un disque rotatif de découpe 41, mis en rotation selon un axe perpendiculaire au conduit de guidage 25, par des moyens moteurs 42 (par exemple de type turbine pneumatique).

Ces moyens de tranchage 40 sont reliés au châssis 10 par le biais de moyens permettant leur déplacement entre :
- une configuration active de « tranchage » (basse), dans laquelle l'organe de coupe 41 vient se placer entre la corde et le fil de montage, sur le trajet des boucles, cela pour assurer la coupe de ces dernières, et
- une configuration inactive rétractée (haute), dans laquelle il est écarté du trajet desdites boucles, de manière à autoriser le cheminement de ces dernières associées à la corde support dans le cadre des opérations de montage.

A titre de sécurité, pour empêcher la mise en marche des moyens de tranchage 40 lors d'une manoeuvre d'écartement du conduit de guidage 25 au moyen du levier 32, un organe interrupteur (non représenté) est avantageusement prévu entre les deux pièces 26 du conduit de guidage 25.
Ainsi, l'écartement de ces deux pièces 26 provoque une coupure automatique de l'alimentation des moyens moteurs pneumatiques 42.

Pour une sécurité optimale, ce dispositif de montage 1 peut être recouvert par une structure de capotage, en particulier pour éviter (ou tout au moins pour limiter) le risque de contact des doigts de l'opérateur avec les moyens de retenue 12 ou avec les moyens de coupe 40.

Pour être complet, sur la figure 2, on remarque la présence de deux brosses 45 dont les poils viennent prendre appui sur les tubes de montage 4 rapportés. Ces brosses 45 constituent des organes de freinage de l'avancement des boucles sur le tube support 4, lors de la traction sur l'ensemble corde support 2/fil de montage 6, en particulier pour réguler le transfert des boucles sur la corde support.
De plus, les logerons 22 sont chacun munis, sur leur longueur, d'un élément allongé 46 configuré pour supporter la bordure de la nappe et tendre les boucles, en particulier lors de leur passage au sein du dispositif de montage 1.

En pratique, l'utilisation de l'installation conforme à la figure 2 va consister à rapporter tout d'abord deux tubes supports 4 sur lesquels sont repliées les deux bordures longitudinales d'un filet « prêt à monter » (non représenté sur cette figure 2). Ces tubes 4 sont à cet effet fixés au moyen des colliers de serrage 23 ; la nappe pend entre ces deux tubes 4.

Ensuite, l'opérateur introduit une corde support 2 au travers de chacun des deux tubes de montage 4. Puis ces cordes support sont placées au sein des conduits de guidage 25 situés dans leur prolongement ; l'opérateur peut pour cela ouvrir temporairement plus amplement leur ouverture longitudinale 25c, en manipulant l'ensemble poignée 32/came 33, et loger la corde 2 au travers de cette ouverture longitudinale.

Après avoir fixé le fil de montage 6 (et le cas échéant le fil de répartition) à chacune des cordes supports 2 correspondantes, il suffit alors à l'opérateur d'exercer une traction simultanée sur les deux ensembles cordes supports/fils de montage.
Cette traction provoque le cheminement de la corde support et d'une partie des boucles sur la longueur du conduit de guidage 25. Le fil de montage (et le cas échéant le fil de répartition) chemine à l'extérieur par rapport à ce conduit de guidage 25 (comme représenté schématiquement sur la figure 9). Les boucles ressortent ainsi au travers de l'ouverture longitudinale 25c, et s'appuient en partie sur le prolongement 34 ; c'est cette portion sortante des boucles 7 qui vient en butée sur les organes de retenue 14 en configuration active (figure 9).

Comme détaillé précédemment en relation avec la figure 1, le passage de l'ensemble corde support/boucles au sein du dispositif 1 assure, sous l'action des moyens de retenue 12, une répartition homogène des boucles sur la longueur des cordes supports, et le serrage des noeuds autoserrants.

Bien entendu, dans le cas où l'opérateur souhaite réaliser le montage d'une seule corde support sur un filet « prêt à monter », il peut tout-à-fait utiliser une installation équipée d'un unique ensemble dispositif de montage 1/support de tube de montage 23.

Encore de manière générale, il convient de noter que les moyens de découpe 40 pourraient tout-à-fait être utilisés indépendamment des moyens de retenue 12, cela par exemple sur un dispositif dédié à la découpe des boucles 7.

Un type de filet « prêt à monter » particulièrement adapté pour la mise en oeuvre du dispositif de montage 1 conforme à l'invention est décrit ci-dessous en relation avec la figure 10 (ce filet est du type de celui décrit par exemple dans le document WO-2006/125929).

Ce type de filet « prêt à monter » comporte un fil de montage 6 muni sur sa longueur d'une pluralité de boucles simples 7a et de noeuds autoserrants 7b, introduits au travers d'un fil de répartition 47.

Les boucles de type noeuds autoserrants 7b sont réalisées au moyen d'un fil rapporté se composant d'une partie centrale formant le noeud autoserrant proprement dit 7b', du genre chaise double, juxtaposée ici à une boucle simple 7a', dite « boucle centrale ». De préférence, pour un serrage optimal avec le dispositif selon l'invention, ce noeud autoserrant 7b se trouve en avant de la boucle simple centrale associée 7a' (ce noeud 7b vient ainsi en premier en butée contre un organe de retenue 14).
Ce noeud central 7b' est prolongé par deux brins latéraux 7b" dont les extrémités sont reliées au fil de répartition 47, à proximité chacune de l'une des boucles simples 7a" avant et arrière. La longueur totale de ces deux brins 7b" est avantageusement inférieure à la longueur du fil de répartition 47 séparant les boucles simples 7a" avant et arrière précitées.

Le dispositif selon l'invention est particulièrement intéressant pour le montage de ce type de structure de filet en ce sens que le phénomène de butée exercé par les organes de retenue au niveau du noeud autoserrant 7b' (et simultanément de sa boucle centrale 7a' associée) est encore renforcé par la traction sur le brin avant 7b" relié au fil de distribution 47 (correspondant à la situation des figures 1 D et 1E) ; de plus, ensuite, la mise en butée de la boucle simple arrière 7a" suivante provoque une traction sur le brin arrière 7b" qui contribue encore au serrage du noeud autoserrant 7b. Par ailleurs, une fois le noeud 7b' serré sur la corde support 2, la boucle simple centrale associée 7a' permet de maintenir une distance identique, ou au moins sensiblement identique, par rapport aux deux boucles simples 7a" juxtaposées.

De manière générale, le dispositif de montage selon l'invention peut également servir à l'assemblage, sur une corde support, d'un filet « prêt à monter » équipé uniquement de boucles « simples ».
Le dispositif de montage permet alors d'appliquer une distance optimale entre les différentes boucles successives associées à la corde support.
Des moyens de fixation appropriés sont mis en oeuvre pour finaliser la liaison entre la corde support et la nappe rapportée.

## Revendications

1. Dispositif pour le montage et la fixation d'une corde support (2), en particulier constitutive d'une ligne de flottaison et/ou de lest, sur une nappe ou un pré-assemblage de nappes de filet (5), en particulier de filet de pêche, équipé d'au moins un fil de montage (6) muni sur sa longueur d'une pluralité de boucles (7) au travers desquelles ladite corde support (2) est enfilée, **caractérisé en ce que** ledit dispositif comporte un châssis (10) équipé :
- de moyens (11) pour guider ladite corde support (2) enfilée sur lesdites boucles de nappe(s) (7), cela lors d'une traction exercée sur ledit ensemble corde support (2)/fil de montage (6), et
- de moyens structurels (12) adaptés pour retenir temporairement et successivement chacune desdites boucles (7) au cours de ladite traction exercée sur ledit ensemble corde support (2)/fil de montage (6), en particulier de manière à optimiser la distance entre deux boucles (7) successives sur la longueur de ladite corde support (2) et le cas échéant de manière à assurer le serrage de boucles (7) en forme de noeuds autoserrants (7b) sur ladite corde support (2) associée pour fixer ladite nappe ou ledit pré-assemblage de nappes (5) sur ladite corde support (2), lesquels moyens de retenue (12) comprennent un corps (13) équipé de n organe(s) de retenue (14), chacun formé d'une tige allongée et rayonnée, lequel corps (13) est associé au châssis (10) par des moyens (15) autorisant sa mise en rotation autour d'un axe (13') perpendiculaire à celui de la corde support (2) circulant au sein des moyens de guidage (11), des moyens d'indexation (36, 37) assurant le blocage, avec une force de blocage définie, de la rotation dudit corps (13) selon des positions situées à un pas régulier de 1/n tour, cela de sorte que chaque position bloquée dudit corps (13) corresponde à la configuration active de l'un desdits organes de retenue (14) dans laquelle il vient se placer entre la corde (2) et le fil de montage (6) sur le trajet des boucles (7), pour constituer une butée aval apte à s'opposer à l'avancement d'une boucle (7) lors de la traction sur l'ensemble fil de montage (6)/corde support (2), le ou les autres organes de retenue (14) étant en configuration inactive dans laquelle ils sont écartés du trajet desdites boucles (7), et de sorte que la rotation dudit corps (13) soit mise en oeuvre par la traction sur les boucles (7) provenant de la traction sur l'ensemble corde support (2)/fil de montage (6), ladite force de blocage assurant un compromis entre la retenue desdites boucles (7) et la force de traction à appliquer sur l'ensemble corde support (2)/fil de montage (6).

2. Dispositif selon la revendication 1, **caractérisé en ce que** les moyens d'indexation (36, 37) comportent des moyens permettant le réglage de la force de blocage.

3. Dispositif selon l'une quelconque des revendications 1 ou 2, **caractérisé en ce que** les moyens de guidage (11) de la corde support (2) consistent en un conduit (25) comportant un orifice d'entrée (25a) et un orifice de sortie (25b), et dont la surface est munie d'une ouverture longitudinale (25c) au travers de laquelle sont aptes à cheminer les boucles (7) du fil de montage (6) enfilées sur ladite corde support (2).

4. Dispositif selon la revendication 3, **caractérisé en ce que** le conduit de guidage (25) de la corde support (2) se compose de deux parties (26), chacune définissant un demi-conduit (27), mobiles en écartement l'une par rapport à l'autre, lequel conduit de guidage (25) est associé à des moyens structurels (32, 33) permettant le réglage de l'écartement desdits deux parties (26).

5. Dispositif selon l'une quelconque des revendications 3 ou 4, **caractérisé en ce que** l'orifice d'entrée (25a) du conduit de guidage (25) est en forme générale d'entonnoir, dont l'axe central s'étend coaxialement au conduit de guidage (25).

6. Dispositif selon l'une quelconque des revendications 1 à 5, **caractérisé en ce qu'**il comporte encore un organe tranchant (40, 41) coopérant avec le châssis (10) par le biais de moyens (43) permettant sa manoeuvre entre :
- une configuration active de « tranchage », dans laquelle il vient se placer entre la corde (2) et le fil de montage (6), sur le trajet des boucles (7), cela pour assurer la coupe de ces dernières, et
- une configuration inactive rétractée, dans laquelle il est écarté du trajet desdites boucles (7), de manière à autoriser le cheminement desdites boucles (7) associées à la corde support (2).

7. Installation pour le montage d'une corde support (2), en particulier une ligne de flottaison et/ou de lest, sur une nappe ou un pré-assemblage de nappes de filet (5), en particulier de filet de pêche, ladite nappe ou ledit pré-assemblage de nappes étant muni au moins d'un fil de montage (6) portant sur sa longueur une pluralité de boucles (7) destinées à venir s'enfiler sur ladite corde support (2), laquelle installation (20) comprend au moins un dispositif de montage (1) selon l'une quelconque des revendications 1 à 6, et un élément (23) porteur d'un tube support (4) pour le transport dudit filet sous forme repliée, sur lequel sont enfilées lesdites boucles (7) et au travers duquel chemine la corde support (2), l'extrémité de sortie dudit tube support (4) étant destinée à venir dans le prolongement des moyens de guidage (11) dudit dispositif de montage (1).

8. Installation selon la revendication 7, **caractérisée en ce qu'**elle comporte encore l'un au moins des éléments structurels suivants :
- un dispositif motorisé de traction sur l'ensemble corde support (2)/fil de montage (6), et
- un organe (45) de freinage de l'avancement des boucles (7) sur le tube support (4).

9. Installation selon l'une quelconque des revendications 7 ou 8, pour une nappe de filet ou un pré-assemblage de nappes de filet (5) muni au niveau de deux de ses bordures d'au moins un fil de montage (6) équipé de boucles (7), **caractérisée en ce qu'**elle comporte deux ensembles dispositif de montage (1)/élément porteur de tube support (23), chacun éventuellement associé à un dispositif de traction et/ou organe de freinage (45), lesdits ensembles (1, 45) étant agencés en regard l'un de l'autre de manière à permettre un montage simultané de deux cordes supports (2) sur le filet.
